# EUROPEAN PATENT APPLICATION

(11) **EP 2 626 819 A1**
(43) Date of publication of application: **14.08.2013**
(21) Application number: 11842455.5
(22) Date of filing: 23.12.2011
(51) Int. Cl.: G06Q 10/06

(54) **METHOD AND SYSTEM FOR DOCUMENTATION OF DIGITAL ARCHIVES**

(30) Priority: 14.12.2011 CN 201110418366
(71) Applicant: Dominator IP Co., Ltd., Beijing 100080 (CN)
(72) Inventor: Zhong, Shan, Bijibg 100080 (CN); Li, Yaou, Bijibg 100080 (CN); Li, Di, Bijibg 100080 (CN); Shi, Dalong, Bijibg 100080 (CN); Wang, Peng, Bijibg 100080 (CN); Che, Huichung, Bijibg 100080 (CN); Wu, Hsiangshuai, Bijibg 100080 (CN)
(74) Representative: Michalski Hüttermann & Partner Patentanwälte
(86) International application number: PCT/CN2011/084519
(87) International publication number: WO 2013/086756

(57) **Abstract**

This application provides a method and system of evidence preservation for digital documents. The method comprises: converting, by a client, the digital document to a document code, which is uniquely corresponding to the digital document; uploading, from the client, the document code and first attribute information of the client to a server, wherein the first attribute information includes user information and geographical position information of the client; and incorporating, by the server, second attribute information into the document code and the first attribute information to form a code file, and preserving the code file in a code file database of the server, wherein the second attribute information includes time information indicating when the document code is received by the server; wherein when contents of the digital document are changed, contents of the document code are changed accordingly.

## Description

### TECHNICAL FIELD

This application relates to a method and system of evidence preservation for digital documents.

### BACKGROUND

Nowadays, digital documents are applied in more and more fields. However, since a digital document can be easily modified and falsified, it is difficult to determine the existing time and the reliability of the digital document. In the fields of protection of copyrights, intellectual property rights etc, there is a need to verify the originality and the existing time of a digital document.

At present, in order to preserve documents to prove the originality and existing time of a digital document, the digital document is normally uploaded to a server, then the digital document is encrypted by the server and the uploading time is recorded.

However, in the above method, the original digital document is required to be uploaded to the server firstly. If the digital document is large and the bandwidth of network is not sufficient, the duration of the uploading time will be long.

Moreover, in another method, the digital document is uploaded to the server, and a document fingerprint is generated by the server. Then, the document fingerprint and the original digital document can be stored in a computer of the client.

In this method, it is also required that network bandwidth shall be sufficient. In addition, since the document fingerprint and the original digital document are stored in the computer of the client, it is easy to modify the document fingerprint. Therefore the reliability of the document fingerprint and the digital document cannot be validly preserved and verified.

### SUMMARY OF THE APPLICATION

It is an object of the application to provide a method and system of evidence preservation for digital documents which can partially eliminate one of the defects in the prior art, so as to ensure the originality and the reliability of the existing time of the digital document. In addition, it is possible to reduce the amount of data transmitted and the bandwidth required, so that the transmission rate and the efficiency can be improved.

According to one aspect of the present application, a method of evidence preservation for a digital document is provided. The method comprises: converting, by a client, the digital document to a document code, which is uniquely corresponding to the digital document; uploading, from the client, the document code and first attribute information of the client to a server, wherein the first attribute information includes user information and geographical position information of the client; and incorporating, by the server, second attribute information into the document code and the first attribute information to form a code file, and preserving the code file in a code file database of the server, wherein the second attribute information includes time information indicating when the document code is received by the server; wherein when contents of the digital document are changed, contents of the document code are changed accordingly.

According to another aspect of the present application, a system of evidence preservation for a digital document is provided. The system comprises at least one client and at least one server, wherein the client comprises a converting module and a transmitting module, the converting module is configured to convert the digital document to a document code which is uniquely corresponding to the digital document, the transmitting module is configured to upload the document code and first attribute information of the client to the server, wherein the first attribute information includes user information and geographical position information of the client; and the server comprises a receiving module, an attribute incorporating module and a code file database, the receiving module is configured to receive the document code from the client, and the attribute incorporating module is configured to incorporate the first attribute information and second attribute information to the received document code to form a code file, wherein the second attribute information includes time information indicating when the document code is received by the server; the code file database is configured to preserve the code file, and when contents of the digital document are changed, contents of the document code are changed accordingly.

### BRIEF DESCRIPTION OF THE DRAWINGS

Fig. 1 is a flow chart of the method of evidence preservation for the digital document according to an embodiment of the present application;

Fig. 2 is a flow chart of the method of evidence preservation for the digital document according to another embodiment of the present application;

Fig. 3 shows the system of evidence preservation for the digital document according to an embodiment of the present application;

Fig. 4 shows the file format of the code file formed by incorporating the attribute information to a head of the document code according to another embodiment of the present application; and

Fig. 5 shows the method of evidence preservation for the digital document according to another embodiment of the present application.

### DETAILED DESCRIPTION OF THE APPLICATION

The method and system of evidence preservation for the digital document of the present application will be described in detail with reference to the drawings. In the figures of the accompanying drawings, elements having the same reference numeral designations represent like elements throughout.

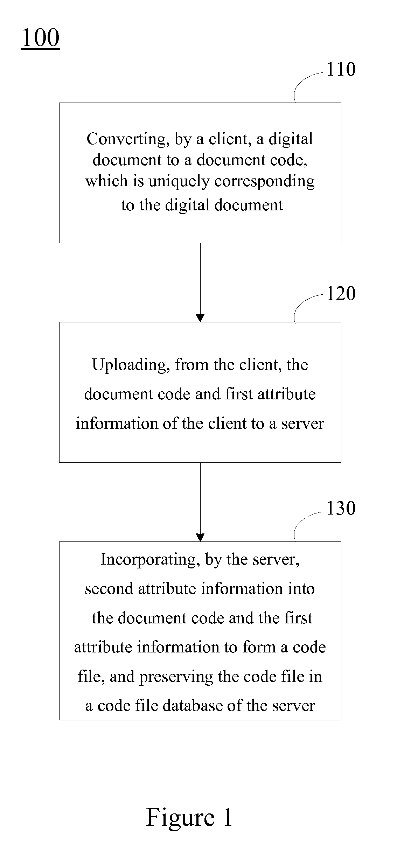

Fig. 1 is a flow chart of the method of evidence preservation for a digital document according to an embodiment of the present application. As shown in Fig.1, in step 110, a client converts a digital document code to a unique document code. In step 120, the client uploads the document code and first attribute information corresponding to the client to a server, and the first attribute information includes user information and geographical position information of the client. In step 130, the server incorporates second information into the document code and the first attribute information to form code file, and preserves the code file in a code file database of the server; the second attribute information includes time information indicating when the document code is received by the server; wherein when contents of the digital document are changed, contents of the document code are changed accordingly.

According to an embodiment, the time information in the second attribute information is the local time of the server indicating when the uploaded document code is received by the server. The time information can be used to verify the existing time of the document code. Since the document code is uniquely corresponding to the digital document, the time information can be used to verify the existing time of the digital document which the uploaded document code is uniquely corresponding to. It can be seen that, the combination of the attribute information of the digital document with the document code can verify the fact that the digital document uniquely corresponding to the document code existed at a specific time. Moreover, since the code file is preserved in the code file database, it is avoided that the client may easily falsify the contents of various attribute information, so that the reliability of various attribute information is ensured.

According to another embodiment, the time information can be provided to the server by a third party other than the client and the server. For example, the server can communicate with the National Time Service Center or another third party organization which can provide the standard time. Since the time information is provided to the server by the organization which can provide the standard time, the time information is more accurate and authoritative.

According to another embodiment, the user information in the first attribute information of the code file can be provided by the server. Here, the user information can be, for example but not limited to, a user identifier which is used when the user logs in the server, or the identifier of the computer used by the user. The user information is obtained by the server through the login of the user.

According to another embodiment, the geographical position information of the first attribute information in the code file can be provided by a terminal of the client. For example, in the case that the terminal is a mobile terminal with GPS (for example, a smart phone with GPS), the geographical position information of the client can be provided by a GPS module of the mobile terminal. In another Example, the geographical position information of the client can be determined by the server after it is transmitted from the client. For example, in the case that the terminal is a computer, the server can determine the geographical position information of the client according to the IP address transmitted from the terminal. It can be understood that the combination of the geographical position information of the client with the document code can prove the geographical position where the document code is uploaded, so as to preserve the uploading geographical position of the digital document corresponding to the document code.

According to an embodiment, the generated document code is uploaded to the server by the client. The server incorporates the attribute information into the received document code to form a code file, and preserves the code file in the server as evidence. A plurality of code files can be preserved in the server, and each of the code files comprises a document code and attribute information of the document code. According to an Example, the attribute information can be, for example but not limited to, incorporated into a head of the document code to form the code file.

According to an embodiment, a digital document is converted to a document code by the client. The document code is uniquely corresponding to the digital document. Here, the document code may refer to code data generated by performing code conversion using a hashing algorithm. The length of the code data is much less than that of the digital document. In an Example, the digital document may be converted to a document code using a hashing algorithm. For example, the digital document may be converted to a document code using MD5 algorithm, and the generated document code is of 128 bits. It can be understood that the uploading time for data of 128 bits will be much less than that for a digital document. Thus, it solves the problem of time-consuming for uploading a digital document. In addition, a document code which is uniquely corresponding to the digital document may be obtained employing hashing algorithms such as MD5, so that the uniqueness of the digital document can be preserved as evidence. In other words, if the digital document is modified, the document code obtained by converting the digital document through the hashing algorithm will be changed, *i.e.,* the document code which is obtained by converting the digital document before a modification is different from the document code which is obtained by converting the digital document after the modification. Moreover, the conversion from the digital document to a document code is irreversible, and thus the contents of the digital document cannot be deduced through the document code. Therefore, it ensures that the digital document will not be disclosed unintentionally. It should be understood that it is just an example of the present application to use the MD5 algorithm to perform the document code conversion. Besides the MD5 algorithm, the other hashing algorithms such as MD4, SHA-1, SHA-225, SHA-256, SHA-384, SHA-512, etc. can be used to generate the document code.

It can be seen that according to the method of evidence preservation for a digital document of the embodiment of the present application, by converting the digital document into the document code, the size of the document can be reduced so that the duration for uploading is reduced. In addition, it can be understood that by preserving the code file, which is formed by incorporating attribute information into the document code, in the server, it can reliably verify the fact that the digital document has existed before a specific time, and it ensures the reliability of the existing time of the code file. Moreover, since the code file is preserved in the server as evidence, the falsification of the code file can be avoided, so as to ensure the credibility of the code file.

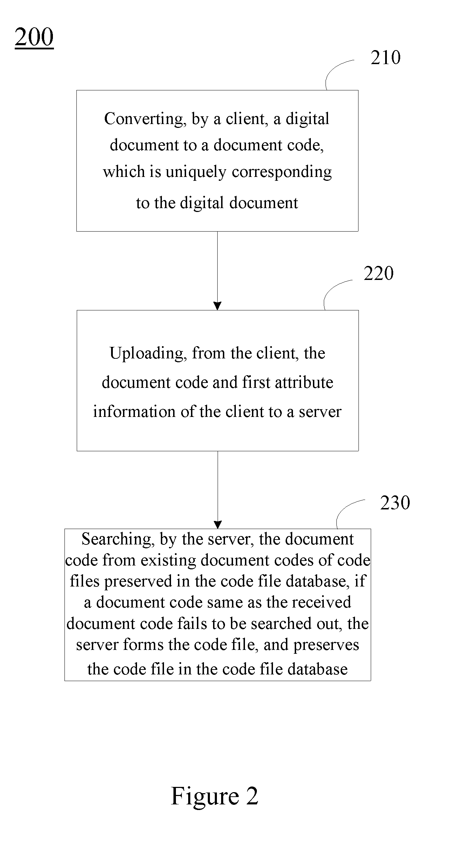

Fig. 2 is a flow chart of the method of evidence preservation for the digital documents according to another embodiment of the present application. As shown in Fig.2, in the step 210, a digital document is converted to a document code by a client. The document code is uniquely corresponding to the digital document. In the step 220, the document code and first attribute information corresponding to the client are uploaded to a server. The first attribute information includes user information and geographical position information of the client. In the step 230, after the server receives the document code uploaded by the client, document codes of the code files preserved in the code file database are searched. If a document code same as the received document code fails to be searched out, the first attribute information and the second attribute information is incorporated into the received document code to form a code file. The code file is preserved in the code file database as evidence. The second attribute information includes time information indicating when the document code is received by the server. In Fig.2, the steps of 210 and 220 are similar to the steps of 110 and 120 in Fig.1, and will not be described in details hereinafter. According to this embodiment, it is possible to determine whether a document code identical to the currently uploaded document code has been preserved in the code file database or not, so that the attribute information of the document code can be incorporated and preserved according to the result of the determination. Thus, the amount of code files preserved in the code file database may be limited and the utilization of the database may be improved.

According to an embodiment, when searching the document codes of the code files preserved in the code file database to determine whether a code file including the document code identical to the uploaded one has been preserved in the server, it is possible to compare the uploaded code document with each of the document codes of the preserved code files having the same user information with the uploaded document code, according to the user information in the first attribute information. That is to say, according to the user information in the attribute information, the server can select the code documents of the code files from the same user as the uploaded code document to proceed with the comparison, so that the comparing time can be reduced and the efficiency can be increased.

According to an embodiment, if the server determines that the same document code as the uploaded one has been preserved, the uploaded document code will be abandoned. In this case, since the same document code has been preserved, it can be determined that the user has converted the same digital document into the document code and uploaded the document code to the server, incorporated the first and second attribute information into the document code previously, and has recorded the previous uploading time of the document code. Since the preservation time of the document code in the previously preserved code file is earlier than the time of the currently uploaded document code, the current document code can be abandoned. In this way, it can ensure the document code as well as its time information of the code file preserved can indicate the time information of the previously uploaded code file, so that it is possible to preserve and prove an earlier time that the digital document corresponding to the document code existed.

According to an embodiment, if it is determined that the code file containing the same document code has been preserved in the server, the server will notify the client the fact that the same document code has been previously preserved in the server. The client may determine how to process the current document code. If the client determines to abandon the current document code, the server will abandon the document code. If the client determines to replace the previously preserved document code with the current document code, the server will incorporate the attribute information into the currently received current document code to form the code file and preserves the code file in the server, and replace the code file corresponding to the previously preserved document code. Here, if the client determines to replace the previously preserved document code with the current document code, the server will notify the client that the uploading time of the document code will be changed. Since the uploading time of the previously preserved document code is earlier than the time of the currently uploaded document code, this replacement will lead to the postpone of the existing time of the digital document. In addition, if the client determines to preserve both of the currently received document code and the previous document code in the server, then the server incorporates the attribute information into the received document code to form a code file and preserves the code file in the server. It can be seen that according to the present embodiment, by comparing the currently received document code with the document code in the code file preserved in the code file database to determine whether the identical document code has been preserved in the server, and by selecting whether to preserve the same document code by the client, it can prevent the existing time of the digital document from being changed and postponed.

According to another embodiment, the code file may include a document code field for recording the document code, a first attribute information field for recording the first attribute information, second attribute information and/or reservation field for recording the second attribute information. The first attribute information field further includes a user information field for recording the user information and a geographical position information field for recording the geographical position information, and the second attribute information includes a time information filed for recording the time information and a reservation field for recording other information. Through this format, the code file can be generated by the document code and the first and second attribute information and preserved in the code file database.

According to an embodiment of the present application, the digital document can also be uploaded to the server, and then be preserved in the digital document database by the server as evidence. In this way, the digital document can be preserved and backup in the server. Furthermore, in the process of preserving the digital document in the digital document database, an encryption processing can be performed so that the security of the digital document can be ensured.

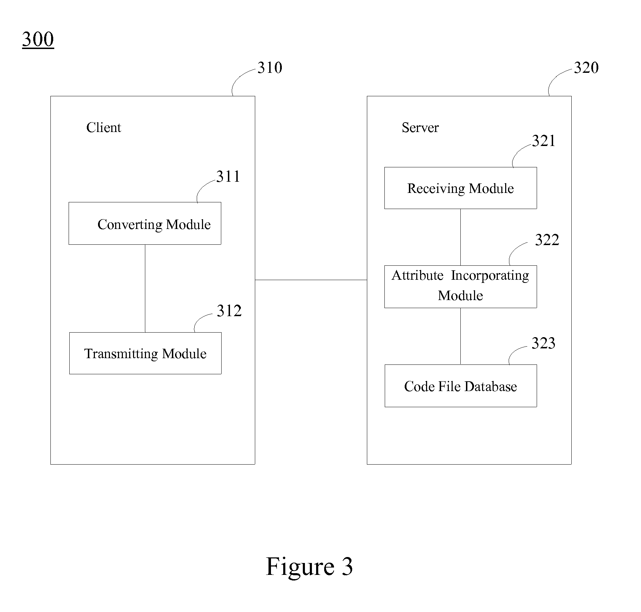

Fig. 3 shows a system 300 of evidence preservation for a digital document according to an embodiment of the present application. The system 300 includes a client 310 and a server 320.

The client 310 includes a converting module 311 and a transmitting module 312. The converting module 311 converts the digital document to a document code which is uniquely corresponding to the digital document. The transmitting module 312 uploads the document code and the first attribute information of the client to the server. The server 320 includes a receiving module 321, an attribute incorporating module 322 and a code file database 323. The receiving module 321 receives the document code from the client. The attribute incorporating module 322 incorporates the first attribute information and second attribute information to the received document code to form a code file. The second attribute information includes the time information indicating when the document code is received by the server. The code file is preserved in the code file database 323. When contents of the digital document are changed, contents of the document code are changed accordingly.

According to an embodiment, the client 310 converts the digital document to the document code which is uniquely corresponding to the digital document, and uploads the document code. Here, the document code may refer to code data generated by performing code conversion using a hashing algorithm. The length of the code data is much less than that of the digital document. In an Example, the digital document may be converted to a document code using a hashing algorithm. For example, the digital document may be converted to a document code using MD5 algorithm, and the generated document code is of 128 bits. It can be understood that the uploading time for data of 128 bits will be much less than that for a digital document. Thus, it solves the problem of time-consuming for uploading a digital document. In addition, a document code which is uniquely corresponding to the digital document may be obtained employing hashing algorithms such as MD5, so that the uniqueness of the digital document can be preserved as evidence. In other words, if the digital document is modified, the document code obtained by converting the digital document through the hashing algorithm will be changed, *i.e.,* the document code which is obtained by converting the digital document before a modification is different from the document code which is obtained by converting the digital document after the modification. Moreover, the conversion from the digital document to a document code is irreversible, and thus the contents of the digital document cannot be deduced through the document code. Therefore, it ensures that the digital document will not be disclosed unintentionally. It should be understood that it is just an example of the present application to use the MD5 algorithm to perform the document code conversion. Besides the MD5 algorithm, the other hashing algorithms such as MD4, SHA-1, SHA-225, SHA-256, SHA-384, SHA-512, etc. can be used to generate the document code.

According to an embodiment, the second attribute information of the document code includes the time information indicating when the document code is uploaded to the server. The time information is the uploading time of the document code, which is used to prove an existing time of the document code. Since the document code is uniquely corresponding to the digital document, the time information can prove the existing time of the digital document which the uploaded document code is uniquely corresponding to. In an embodiment, the time information may include the local time when the uploaded document code is received by the server. According to another embodiment, the time information can be provided to the server by a third party. For example, the server can communicate with the National Time Service Center or another third party organization which can provide a standard time. The time information is provided to the server by the organization which can provide the standard time so as to ensure that the time of the server is accurate and standard.

According to another embodiment, the user information in the first attribute information of the code file can be provided by the server. Here, the user information can be, for example but not limited to, a user identifier which is used when the user logs in the server, or the identifier of the computer used by the user. The user information is obtained by the server through the login of the user.

According to another embodiment, the first attribute information of the document code includes the geographical position information of the client. In an Example, the geographical position information of the client can be provided by a terminal. For example, in the case that the terminal is a mobile terminal with GPS (for example, a smart phone with GPS), the geographical position information of the client can be provided by a GPS module of the mobile terminal. In another Example, the geographical position information of the client can be determined by the server after it is transmitted from the client. For example, in the case that the terminal is a computer, the server can determine the geographical position information of the client according to the IP address transmitted from the terminal. It can be understood that the combination of the geographical position information of the client with the document code can prove the geographical position where the document code is uploaded, so as to preserve the uploading geographical position of the digital document corresponding to the document code.

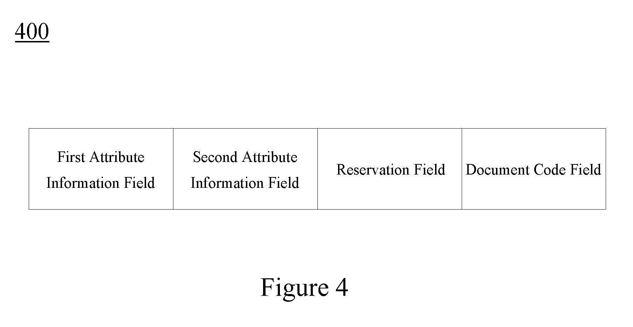

According to an example, the code file is generated by the attribute information and the document code according to, but not limited to, the file format as shown in Fig. 4. Fig. 4 shows the file format of the code file formed by incorporating the attribute information into a head of the document code. For example, as shown in Fig.4, the code file includes: a document code field for recording the document code, a first attribute information field for recording the first attribute information, a second attribute information and/or reservation field for recording the second attribute information. The first attribute information field further includes a user information field for recording the user information and a geographical position information field for recording the geographical position information, and the second attribute information includes a time information filed for recording the time information and a reservation field for recording other information. The attribute incorporating module 322 may incorporate the first and second attribute information into the document code to form the code file utilizing the above format and preserve the code file in the code file database 323.

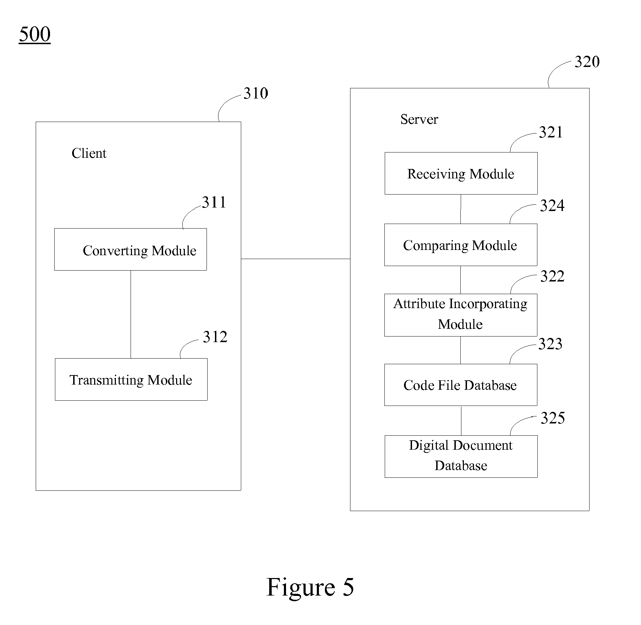

Referring to Fig.5, according to an embodiment, the server 320 further includes a comparing module 324. The comparing module 324 searches document codes of code files preserved in code file database 323, after a document code uploaded by the client is received by the server 320, and compares the preserved document codes with the document code uploaded by the client. According to an Example, the comparing module 324 obtains the preserved code files from the code file database 323, and compares the uploaded document code with document codes extracted from the document code field.

Since the document code is uniquely obtained by converting the digital document, if an identical document code is not previously preserved in the code file database 323, it means that it is the first time that the document code is uploaded to the code file database 323. In other words, no identical digital document has been converted the document code for preservation. At this time, the attribute incorporating module 322 incorporates the attribute information into the received document code to form the code file, and preserves the code file into the code file database 323. According to an embodiment, when determining whether the same document code has been preserved in the server, according to the user information of the first attribute information, the uploaded code document can be compared with the code document contained in each of the code files preserved in the code file database 323. According to another embodiment, according to the user information of the first attribute information, it is possible to compare the uploaded code document with each of the code documents of the code files preserved in the code file database 323 having the same user information with the uploaded code document. Since each digital document is uniquely corresponding to a document code, it can be determined whether the same document code has been preserved through the comparison, and then it can be determined whether the digital document has already existed. If no identical document code has been preserved, the attribute incorporating module 322 incorporates the first attribute information and the second attribute information into the received document code to form the code file, and preserves the code file in the code file database 323.

According to an embodiment, if the comparing module 324 determines that the same document code has been preserved, the server 320 abandons the document code. In this case, since the same document code has been existed, it can be determined that the user has converted the same digital document to the document code and uploaded the document code to code file database 323. In addition, the attribute information has been incorporated into the document code previously, and the time when the document code is previously uploaded has been recorded. Since this time is earlier than the time of the currently uploaded document code, the current document code can be abandoned. In this way, it can ensure the document code as well as its time information of the code file preserved can indicate the time information of the previously uploaded code file, so that it is possible to preserve and prove an earlier time that the digital document corresponding to the document code existed.

According to an embodiment, if the comparing module 324 determines that the same document code is preserved, it notifies the client 310 that the same document code was previously preserved in the code file database 323. The client then determines how to process the current document code. If the client 310 determines to abandon the current document code, the server 320 will abandon the document code. If the client 310 determines to replace the previously preserved document code with the current document code, the attribute incorporating module 322 incorporates the attribute information into the currently received document code to form the code file, and preserves the code file in the code file database 323 and replace the code file corresponding to the previously preserved document code. Here, if the client 310 determines to replace the previously preserved document code with the current document code, the server 320 will notify the client 310 that the uploading time of the document code preserved in the code file database 323 will be changed. Since the uploading time of the previously preserved document code is earlier than the time of the currently uploaded document code, this replacement will lead to the postpone of the existing time of the digital document. In addition, if the client 310 determines to preserve both the currently received document code and the previous document code in the code file database 323, the code file database 323 incorporates the attribute information into the received document code to form the code file, and preserves the code file in the code file database 323.

Referring to Fig.5, according to another embodiment of the present application, the user may upload the digital document to the server 320, and then the server preserves the digital document in the digital document database 325 as evidence. In this way, the digital document can be preserved and backup in the digital document database 325. Furthermore, in the process of preserving the digital document in the digital document database 325 by the server 320, an encryption processing can be performed so that the security of the digital document can be ensured.

While the present application has been illustrated by the above description and embodiments or implementations, it is not intended to restrict or in any way limit the scope of the appended claims hereto.

## Claims

1. A method of evidence preservation for a digital document, comprising:
converting, by a client, the digital document to a document code, which is uniquely corresponding to the digital document;
uploading, from the client, the document code and first attribute information of the client to a server, wherein the first attribute information includes user information and geographical position information of the client; and
incorporating, by the server, second attribute information into the document code and the first attribute information to form a code file, and preserving the code file in a code file database of the server, wherein the second attribute information includes time information indicating when the document code is received by the server; wherein when contents of the digital document are changed, contents of the document code are changed accordingly.

2. The method according to claim 1, wherein said incorporating, by the server, a second attribute information into the document code and the first attribute information to form a code file, and preserving the code file in a code file database of the server includes:
after receiving the document code uploaded by the client, searching the document code from existing document codes of code files preserved in the code file database;
if a document code same as the received document code fails to be searched out, incorporating, by the server, the first attribute information and the second attribute information into the received document code to form the code file, and preserving the code file in the code file database.

3. The method according to claim 1 or 2, further comprising:
uploading, by the client, the digital document to the digital document database.

4. The method according to claim 1 or 2, wherein the time information is local time of the server.

5. The method according to claim 1 or 2, wherein the time information is time provided to the server by a third party other than the client and the server.

6. A system of evidence preservation for a digital document, comprising at least one client and at least one server, wherein
the client comprises a converting module and a transmitting module, the converting module is configured to convert the digital document to a document code which is uniquely corresponding to the digital document, the transmitting module is configured to upload the document code and first attribute information of the client to the server, wherein the first attribute information includes user information and geographical position information of the client; and
the server comprises a receiving module, an attribute incorporating module and a code file database, the receiving module is configured to receive the document code from the client, and the attribute incorporating module is configured to incorporate the first attribute information and second attribute information to the received document code to form a code file, wherein the second attribute information includes time information indicating when the document code is received by the server; the code file database is configured to preserve the code file, and when contents of the digital document are changed, contents of the document code are changed accordingly.

7. The system according to claim 6, wherein the server further comprises a comparing module, after receiving the document code uploaded by the client, the comparing module searches existing document codes of code files preserved in the code file database and compares the existing document codes with the document code uploaded by the client.

8. The system according to claim 6, wherein the transmitting module of the client is configured to upload the digital document to the server, and the server is configured to preserve the digital document in the digital document database.

9. The system according to anyone of claims 6 to 8, wherein the time information is local time of the server.

10. The system according to claim 9, wherein the time information is time provided to the server by a third party other than the client and the server.
